# EUROPÄISCHE PATENTSCHRIFT

(11) **EP 0 578 923 B1**
(45) Veröffentlichungstag und Bekanntmachung des Hinweises auf die Patenterteilung: **07.08.1996**
(21) Anmeldenummer: 93105749.1
(22) Anmeldetag: 07.04.1993
(51) Int. Cl.: F16B 43/00, E04F 13/08, E04D 3/36

(54) **Verbindungsstift**
Assembly pin
Broche d'assemblage

(30) Priorität: 17.07.1992 DE 9209623 U
(43) Veröffentlichungstag der Anmeldung: 19.01.1994
(73) Patentinhaber: EJOT KUNSTSTOFFTECHNIK GmbH & Co. KG, D-57319 Bad Berleburg (DE)
(72) Erfinder: Riecke, Ernst-Hermann, W-5920 Bad Berleburg-Berghausen (DE)
(74) Vertreter: Missling, Arne, Dipl.-Ing.

(56) Entgegenhaltungen:
- EP-A- 0 420 799
- WO-A-88/05487
- DE-A- 2 744 036
- DE-U- 8 612 794
- US-A- 3 299 766

## Beschreibung

Die Erfindung betrifft einen Verbindungsstift nach dem Oberbegriff des Anspruches 1. Ein derartiger Verbindungsstift ist aus der EP-0 420 799 B1 bekannt.

Bei derartigen Befestigern ist das elastische Element in der Hülse eines Befestigers integriert, wobei beim Einschlagen des Verbindungsstiftes dieses elastische Element komprimiert und durch die Hülse in den Untergrund eingetrieben werden kann. Durch diese relative Verschiebbarkeit des elastischen Elementes relativ zum Untergrund kann eine definierte Anspreßkraft am Verbindungsstift nicht erreicht werden.

Verbindungsstifte dieser Art dienen vor allem zur Anbindung von Platten an Wand- oder Deckenkonstruktionen. Dazu werden Befestigungselemente aus Kunststoff verwendet, die durch die zu befestigende Platte hindurchgedrückt werden. Eine Vorlochung der Platte ist im allgemeinen nicht erforderlich, da solche Platten naturgemäß aus einem Werkstoff bestehen, der mit der Hülse des Befestigungselementes leicht durchstoßen werden kann.

Wenn die Hülse bis zur Unterkonstruktion vorgedrungen ist, wird der Verbindungsstift in die Unterkonstruktion eingetrieben, sei es durch Schläge oder Stöße oder indem der Verbindungsstift eingedreht wird, wenn er, wenigstens teilweise, als Schraube ausgebildet ist.

Aus der EP-Patentschrift 0 189 569 B1 ist es bereits bekannt, daß die Hülse mit einem Bereich ausgerüstet ist, der stauchbar ist. Dies ist zweckmäßig, weil dadurch Toleranzen der beteiligten Bauteile, der ausgeübten Schlagkräfte usw. und der Widerstandes im Werkstoff der Unterkonstruktion beim Eindringen des Verbindungsstiftes ausgeglichen werden können. Auf diese Weise kann man sicherstellen, daß die Druckplatte des Befestigungselementes stets an der zu befestigenden Platte anliegt. Bei der vorbekannten Anordnung ist an der Hülse eine ringförmige Auflagefläche vorgesehen, auf der der Kopf des Verbindungsstiftes aufliegt, wenn das Befestigungselement angebracht ist.

Wird der aus der vorbekannten Druckschrift bekannte Befestigungsstift ohne das dort beschriebene Befestigungselement verwendet, dann findet ein Toleranzausgleich nicht statt. Aber auch beim Anbringen eines Befestigungselementes treten Nachteile insofern auf, als der Kopf und der anschließende Teil des Stiftskörpers des Verbindungsstiftes gegen Aufschlag- oder Kondenswasser nicht so geschützt ist, wie das wünschenswert erscheint. Selbst wenn der Kopf mit Kunststoff umhüllt ist und die Kunststoffumhüllung zum Teil in eine passende ringförmige Ausnehmung des Befestigungselementes gerät, wenn der Kopf auf der Auflagefläche der Hülse aufliegt, besteht weiterhin die Gefahr, daß durch die verbleibenden Ringspalte Feuchtigkeit bis zum Metallteil des Verbindungsstiftes vordringen kann.

Die Erfindung hat sich deshalb die Aufgabe gestellt, einen Verbindungsstift der eingangs näher bezeichneten Art so auszubilden, daß er sowohl mit als auch ohne ein getrenntes Befestigungselement verwendet werden kann, um einen Gegenstand auf einem Gegenstück zu befestigen.

Erfindungsgemäß wird die Aufgabe mit den Merkmalen des Anspruches 1 gelöst. Das Element kann dabei von einem Rohrstück oder von einer Schraubenfeder gebildet werden.

Der Toleranzabgleich in Bezug auf die Eindringtiefe des Verbindungsstiftes findet gemäß der Erfindung nun dort statt, wo die Toleranz primär auftritt. Damit ist eine sichere Befestigung des Gegenstandes gewährleistet, ohne daß dieses an der Befestigungsstelle einer übermäßigen und gegebenenfalls zu Zerstörungen führenden Anpreßkraft ausgesetzt ist.

In einfacher Weise kann das Element rotationssymmetrisch ausgebildet und mittels eines Preßsitzes an dem Stiftskörper befestigt sein. Es ist auf diese Weise unverlierbar und in dieser einfachen Form sehr kostengünstig herstellbar.

Stattdessen ist es auch möglich, daß das Element einstückig mit einer vorzugsweise rotationssymmetrischen Umhüllung des Kopfes ausgeführt ist und mit dieser ein als Kunststoff-Spritzteil ausgeführtes, fest mit dem Kopf verbundenes Kopfstück bildet. Auf diese Weise ist der Verbindungsstift vollständig gegen die Umwelt abgedichtet und kann von Aufschlag- oder Kondenswasser nicht erreicht werden. Darüberhinaus ist sichergestellt, daß auch ein auf dem Verbindungsstift vorgesehener galvanischer Überzug nicht zerstört werden kann, wenn eine Schlagkraft auf dem Kopf ausgeübt wird.

Es ist günstig, wenn das Element den Stiftskörper mit Abstand umgibt, damit eine einwandfreie Stauchung vor sich gehen kann. In vorteilhafter Weise ist an dem Kopfstück eine zylindrische Führungshülse einstückig vorgesehen, die konzentrisch zu dem Element an dem Stiftkörper mindestens im Bereich des Kopfes spielfrei anliegt, wobei die Führungshülse kürzer, vorzugsweise erheblich kürzer sein sollte als das Element. Eine derartige Führungshülse stellt die axiale Führung des gesamten Verbindungsstiftes sicher. Die Stauchung des Elementes wird unterstützt, wenn an diesem mehrere Ringwülste, Ringnuten oder dergleichen vorgesehen sind, so daß beim Stauchen im Idealfall nur Ringstücke koaxial gegeneinander verschoben werden. Die Abdichtung des Elementes, beispielsweise direkt am Gegenstand, ist besser, wenn an der offenen Stirnseite des Elementes eine Ringwulst vorgesehen ist, so daß die Ebenheit der Stirnseite auch unter gegebenenfalls aus der Achsrichtung abweichenden Dichtkraft gewährleistet ist.

Zur Erhöhung der Widerstandsfähigkeit der Umhüllung ist es zweckmäßig, wenn die der offenen entgegengerichtete, kopfseitige Stirnseite des Kopfstückes mit einer Bewehrung, beispielsweise mit einer angespritzten oder angeklebten Metallplatte, ausgerüstet ist.

Um eine vorbestimmbare, konstante Dichtkraft auch bei unterschiedlichen Eindringtiefen des Verbindungsstiftes zu erreichen, soll das Element bzw. das gesamte Kopfstück aus einem bei Schlagwirkung unter Druck plastisch verformbaren Kunststoff mit einer bestimmten Restelastizität bestehen. Es ist möglich, daß das Element bzw. das Kopfstück verschieden einfärbbar ist und die jeweilige Einfärbung eine Gruppe untereinander gleicher Verbindungsstifte charakterisiert. Hier wird also in bekannter Weise die Farbe (des Elementes bzw. Kopfstückes) zur Sortierung verschiedener Größen oder Arten von erfindungsgemäßen Verbindungsstiften verwendet.

Um das Eindringen des Stiftskörpers in das Gegenstück zu erleichtern, insbesondere aber zur Zentrierung der Hülse eines Befestigungselementes, ist es vorteilhaft, wenn der Stiftskörper mindestens einmal auf einen kleineren Durchmesser eingezogen und die Einziehung als sich in Treibrichtung des Verbindungsstiftes verjüngender Kegelstumpf ausgebildet ist. Für reine schlaggetriebene Verbindungsstifte ist es zweckmäßig, wenn der Kopf als kreisförmige Platte und der Stiftskörper glatt zylindrisch ausgebildet ist. Ist hingegen ein Schraubteil vorgesehen, dann wäre der Stiftskörper mindestens teilweise mit einem zylindrischen Gewinde zu versehen und der Kopf als Schraubenkopf auszubilden.

In einer Weiterbildung bezieht sich die Erfindung auf ein Befestigungselement, vor allem für die Befestigung von schall- und wärmeisolierenden Platten an einer Unterkonstruktion, mit einem vorzugsweise als Kunststoff-Spritzteil ausgebildeten Halteteil und einer Hülse, die am hinteren Ende des Befestigungselementes eine einstückig angeformte Druckplatte aufweist, wobei die Druckplatte gegenüber dem Durchmesser der Hülse großflächig ausgebildet ist, und mit einem Verbindungsstift nach einem der Ansprüche 1 bis 16. Erfindungsgemäß liegt bei einem solchen Befestigungselement die dem Kopf des Verbindungsstiftes abgewandte Stirnseite des Elementes bzw. des Kopfstückes an einer ringförmigen Anschlagfläche der Hülse an, wenn der Verbindungsstift eingeschlagen ist. Für den Fall, daß sehr große Längentoleranzen auftreten, ist es möglich, daß die Hülse mindestens ein stauchbares Teilstück aufweist.

Insgesamt ist damit das aus dem Stand der Technik bereits bekannte Befestigungselement viel universeller einsetzbar, wobei in den meisten Fällen eine Stauchung dessen Hülse unterbleibenkann, weil der Verbindungsstift bereits alle Toleranzen ausgeglichen hat.

Die Erfindung wird nachstehend anhand der Zeichnung an einem Ausführungsbeispiel näher erläutert. Es zeigen
- Fig. 1: einen erfindungsgemäßen Verbindungsstift,
- Fig. 2: den Verbindungsstift mit gestauchtem Kopfstück,
- Fig. 3: den Verbindungsstift gemäß Fig. 1, für eine Befestigung vorbereitet, eingesetzt in ein Befestigungselement,
- Fig. 4: ein fertig montiertes Befestigungselement,
- Fig. 5 und 6: eine erste Variante zu der Ausführung gemäß Fig. 1 und 2 und
- Fig. 7 und 8: eine zweite Variante zu der Ausführung gemäß Fig. 1 und 2.

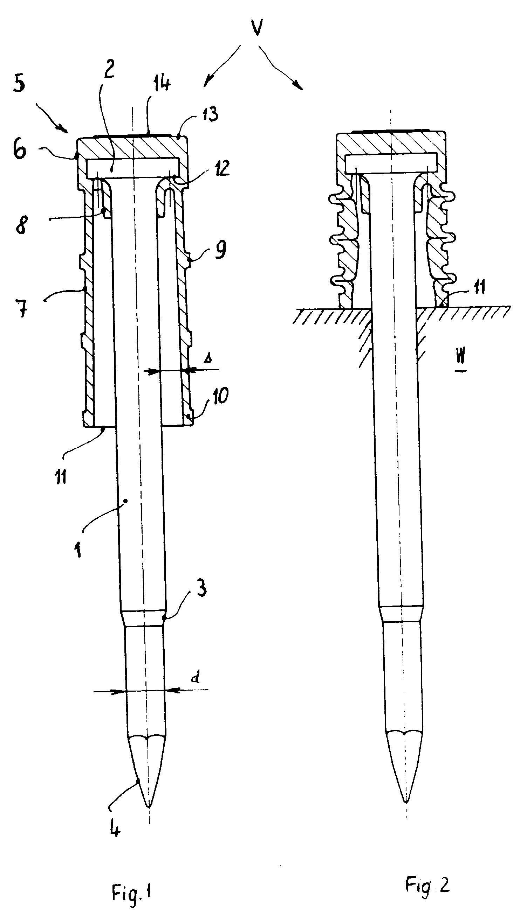

Ein erfindungsgemäßer Verbindungsstift V besteht zunächst entsprechend Fig. 1 aus einem Stiftskörper 1 und einem mit diesem einstückig verbundenen Kopf 2. Der Stiftskörper 1 ist glatt zylindrisch ausgeführt, allerdings ist ein Teilstück auf einen etwas kleineren Durchmesser d mit Hilfe einer kegelstumpfförmigen Einziehung 3 reduziert; die Einziehung 3 verjüngt sich in Richtung auf eine Stiftspitze 4. Der Kopf 2 ist von einem Kunststoff-Spritzteil in Form eines Kopfstückes 5 umgeben, das direkt an den Kopf angespritzt ist. Es besteht aus einer Umhüllung 6 des Kopfes 2 und einem Element 7, das ebenso wie eine Führungshülse 8 einstückig mit der Umhüllung 6 verbunden ist. Das Element 7 ist mit mehreren Ringwülsten 9 versehen; stattdessen können auch Ringnuten vorgesehen sein. Dies trägt dazu bei, daß eine Stauchung des Elementes 7 dessen Rotationssymmetrie nach Möglichkeit bewahrt. Eine Ringwulst 10 an der zur Spitze 4 weisenden Stirnseite 11 des Elementes 7 dient der Verstärkung und der Formstabilität der Stirnseite 11 im Falle eines Anschlages. Die entgegengesetzte Stirnseite 12 des Elementes 7 liegt am Kopf 2 an.

Zwischen dem Element 7 und dem Stiftskörper 1 ist ein allseitiger Abstand s vorgesehen, der erforderlich ist, wenn die an der Stirnseite 11 angreifende Stauchkraft zu einer nicht zu hohen Flächenpressung führen soll und im übrigen genügend Raum verbleibt, daß gestauchte Bereiche des Elementes 7 nach innen weggedrückt werden können. Die Führungshülse 8 sorgt für eine Zentrierung und axiale Stabilisierung des gesamten Kopfstückes 5 in Bezug auf den Stiftskörper 1. An der äußeren Stirnfläche 13 der Umhüllung 6 ist eine Metallplatte 14 festgeklebt, die für eine gleichmäßige Flächenpressung beim Schlag auf die Stirnfläche 13 sorgt und auf diese Weise der Zerstörung des Kopfstückes 5 entgegenwirkt.

Des Kopfstück 5 besteht aus einem spritzfähigen, plastisch verformbaren Kunststoff, der dessenungeachtet nach seiner plastischen Verformung eine gewisse Restelastizität besitzt, so daß nach dem Einschlagen des Verbindungsstiftes bis zum Anschlag der Stirnseite 11 diese mit Vorspannung anliegt. Die Situation ist in Fig. 2 dargestellt. Die Stirnseite 11 liegt hier an einem Gegenstand W an, das mit Hilfe des Verbindungsstiftes V mit einem in der Zeichnung weggelassenen Gegenstück G verbunden ist. Die Vorspannung zwischen der Stirnseite 11, deren Ebenheit durch die Ringwulst 10 unterstützt wird, und dem Gegenstand W stellt sicher, daß an dieser (einzig möglichen) Stelle keine Feuchtigkeit in den Bereich der metallischen Teile des Verbindungsstiftes V gelangen kann.

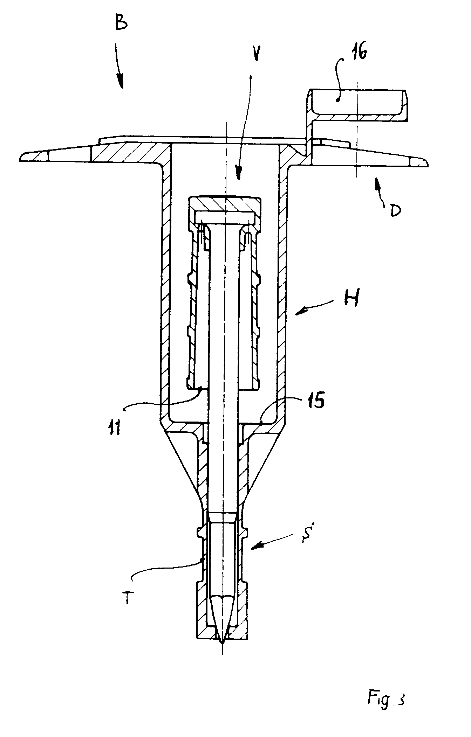

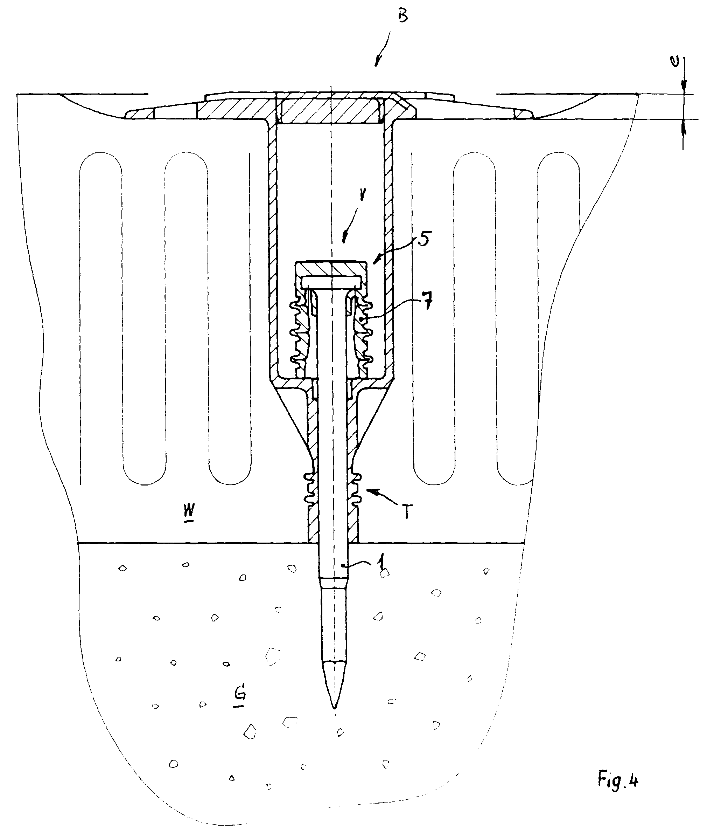

Die Fig. 3 und die Fig. 4 zeigen die Anwendung eines erfindungsgemäßen Verbindungsstiftes in Verbindung mit einem Befestigungselement B für Isolierplatten oder dergleichen an einer Unterkonstruktion, beispielsweise aus Beton. Dabei zeigt die Fig. 3 das Befestigungselement B einschließlich seines zugehörigen Verbindungsstiftes, vorbereitet zur Verwendung. Das Befestigungselement B besteht im wesentlichen aus einer rohrförmigen Hülse H unterschiedlichen Durchmessers, die eine Stiftsführung S mit einer Druckplatte D einstückig verbindet. Die Hülse H besitzt am Übergang zur Stiftsführung S eine kreisringförmige Auflagefläche 15, an welcher die Stirnseite 11 des Kopfstückes 5 anschlägt, wenn der Verbindungsstift V eingeschlagen wird. Die Hülse H ist mittels eines Deckels 16 verschließbar. Der Deckel 16 kann einstückig an dem Befestigungselement B angeformt sein. Schließlich ist im Bereich der Stiftsführung S ein Teilstück T zu erkennen, dessen Wanddicke so bemessen ist, daß auch hier beim Auftreten axialer Kräfte auf das Befestigungselement eine Stauchung eintreten kann.

In der Fig. 4 ist gezeigt, wie ein Gegenstand W mit einem Gegenstück G mit Hilfe des Befestigungselementes B bzw. des Verbindungsstiftes V verbunden ist. Es ist gut zu erkennen, daß hier sowohl das Kopfstück 5 des Verbindungsstückes V als auch das Teilstück T des Befestigungselementes B gestaucht ist, wobei das zusammengestauchte Element 7 die unterschiedliche Eindringtiefe des Stiftskörpers 1 in das Gegenstück G reguliert und der Teilbereich T geeignet ist, die Eindringtiefe e des Druckstückes D in dem Gegenstand W konstant zu halten.

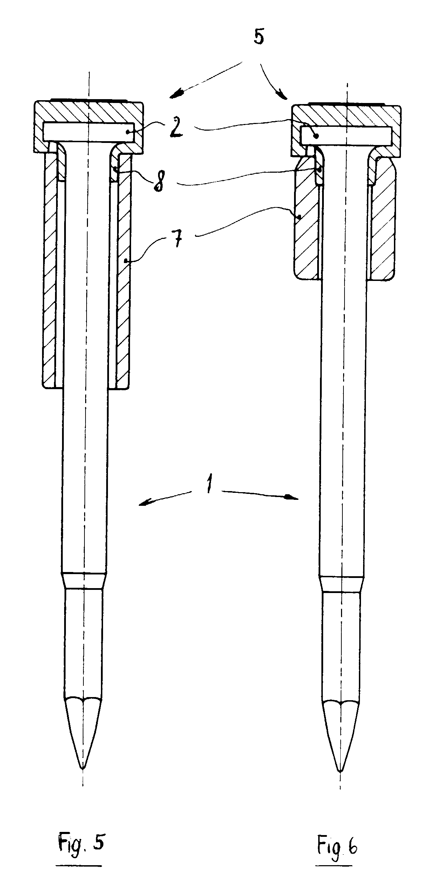

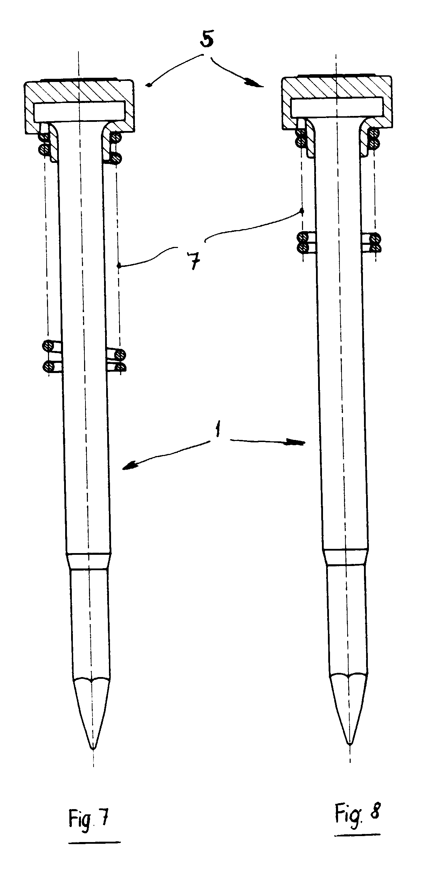

Während in den Fig. 1 und 2 das Element 7 einstückig mit einem Kopfstück 5 als Kunststoff-Spritzteil ausgeführt ist, zeigen die Fig. 5 und 6 eine zweigeteilte Ausführung. Das Kopfstück 5 ist getrennt von dem Element 7 auf den Kopf 2 aufgespritzt, und das Element 7, hier genauso wie in den Fig. 1 und 2 als Rohrstück ausgebildet, ist, gegebenenfalls mit einem leichten Preßsitz, auf der Führungshülse 8 angeordnet. Die Fig. 5 zeigt die Anordnung vor und die Fig. 6 nach dem Einschlagen des Stiftskörpers 1.

In der Ausführung der Fig. 7 und 8 ist anstelle eines Rohrstückes eine Schraubenfeder als Element 7 verwendet. Hierbei wird eine rein elastische Verformung des Elementes 7 ausgenutzt. Die Form des Stiftskörpers 1 und des Kopfstückes 5 entsprechen dem vorgenannten Verbindungsstift der Fig. 5 und 6. Die Fig. 7 zeigt die Anordnung vor und die Fig. 8 nach dem Einschlagen des Stiftskörpers 1.

## Patentansprüche

1. Verbindungsstift aus Metall, insbesondere nagelartiger Verbindungsstift, zur Befestigung eines Gegenstandes an einem Gegenstück mittels Einschlagens und/oder Einschraubens oder dergleichen, beispielsweise in Verbindung mit einem Befestigungselement für die Befestigung von wärme- und schallisolierenden Platten an einer Unterkonstruktion, einstückig bestehend aus einem einseitig angespitzten, im wesentlichen zylindrischen Stiftskörper und einem anderseitig auf der Schlagseite des Stiftskörpers befindlichen Kopf, wobei der Stiftskörper (1) im Bereich des Kopfes (2) von einem beim Einschlagen und/oder Einschrauben oder dergleichen in Achsrichtung des Stiftskörpers (1) plastisch und/oder elastisch verformbaren Element (7), insbesondere aus Kunststoff oder Gummi, umgeben ist, dessen eine Stirnseite (12) nach dem Einschlagen und/oder Einschrauben oder dergleichen unter Vorspannung an dem Kopf (2) anliegt, dadurch gekennzeichnet, daß die andere Stirnseite (11) direkt oder über eine Hülse (H) des Befestigungselementes (B) an dem Gegenstück (G) anliegt und daß das Element (7) einstückig mit einer vorzugsweise rotationssymmetrischen Umhüllung (6) des Kopfes (2) ausgeführt ist und mit dieser ein als Kunststoff-Spritzteil ausgeführtes, fest mit dem Kopf (2) verbundenes Kopfstück (5) bildet.

2. Verbindungsstift nach Anspruch 1, dadurch gekennzeichnet, daß das Element (7) aus einem Rohrstück besteht.

3. Verbindungsstift nach Anspruch 1, dadurch gekennzeichnet, daß das Element (7) aus einer Schraubenfeder besteht.

4. Verbindungsstift nach Anspruch 1, dadurch gekennzeichnet, daß das Element (7) rotationssymmetrisch ausgebildet ist.

5. Verbindungsstift nach Anspruch 1 oder 4, dadurch gekennzeichnet, daß das Element (7) mittels Preßsitz an dem Stiftskörper (1) befestigt ist.

6. Verbindungsstift nach einem der Ansprüche 1 bis 5, dadurch gekennzeichnet, daß das Element (7) den Stiftskörper (1) mit Abstand (s) umgibt.

7. Verbindungsstift nach einem der Ansprüche 1 bis 6, dadurch gekennzeichnet, daß an dem Kopfstück (5) eine zylindrische Führungshülse (8) einstückig vorgesehen ist, die konzentrisch zu dem Element (7) an dem Stiftskörper (1) mindestens im Bereich des Kopfes (2), vorzugsweise spielfrei, anliegt.

8. Verbindungsstift nach Anspruch 7, dadurch gekennzeichnet, daß die Führungshülse (8) kürzer, vorzugsweise erheblich kürzer, als das Element (7) ist.

9. Verbindungsstift nach einem der Ansprüche 1 bis 6, dadurch gekennzeichnet, daß an dem Element (7) mehrere Ringwülste (9), Ringnuten oder dergleichen zur Steuerung der Stauchung vorgesehen sind.

10. Verbindungsstift nach Anspruch 9, dadurch gekennzeichnet, daß eine Ringwulst (10) an der offenen Stirnseite (11) des Elementes (7) vorgesehen ist.

11. Verbindungsstift nach einem der Ansprüche 1 bis 10, dadurch gekennzeichnet, daß die der offenen (11) entgegengerichtete kopfseitige Stirnfläche (13) des Kopfstückes (5) mit einer Bewehrung, beispielsweise mit einer angespritzten oder angeklebten Metallplatte (14), ausgerüstet ist.

12. Verbindungsstift nach einem der Ansprüche 1 bis 11, dadurch gekennzeichnet, daß das Element (7) bzw. das gesamte Kopfstück (5) aus einem bei Schlagwirkung unter Druck plastisch verformbaren Kunststoff mit einer bestimmten Restelastizität besteht.

13. Verbindungsstift nach einem der Ansprüche 1 bis 12, dadurch gekennzeichnet, daß das Element (7) bzw. das Kopfstück (5) verschieden einfärbbar ist und die jeweilige Einfärbung eine Gruppe untereinander gleicher Verbindungsstifte (1) charakterisiert.

14. Verbindungsstift nach einem der Ansprüche 1 bis 13, dadurch gekennzeichnet, daß der Stifskörper (1) mindestens einmal auf einen kleineren Durchmesser (d) eingezogen und die Einziehung (3) als sich in Treibrichtung des Verbindungsstiftes (1) verjüngender Kegelstumpf ausgebildet ist.

15. Verbindungsstift nach einem der Ansprüche 1 bis 14, dadurch gekennzeichnet, daß der Kopf (2) als kreisförmige Platte ausgebildet ist.

16. Verbindungsstift nach einem der Ansprüche 1 bis 15, dadurch gekennzeichnet, daß der Stiftskörper (1) glatt zylindrisch ausgeführt ist.

17. Verbindungsstift nach einem der Ansprüche 1 bis 15, dadurch gekennzeichnet, daß der Stiftskörper (1) mindestens teilweise mit einem zylindrischen Gewinde versehen und der Kopf (2) als Schraubenkopf ausgebildet ist.

18. Befestigungselement, vor allem für die Befestigung von schall- und wärmeisolierenden Platten an einer Unterkonstruktion, mit einem vorzugsweise als Kunststoff-Spritzteil ausgebildeten Halteteil mit einer Hülse, die am hinteren Ende des Befestigungselementes eine einstückig angeformte Druckplatte aufweist, wobei die Druckplatte gegenüber dem Durchmesser der Hülse großflächig ausgebildet ist, und mit einem Verbindungsstift nach einem der Ansprüche 1 bis 17, dadurch gekennzeichnet, daß die dem Kopf (2) des Verbindungsstiftes (1) abgewandte Stirnseite (11) des Elementes (7) bzw. des Kopfstückes (5) an einer ringförmigen Anschlagfläche (15) der Hülse (H) anliegt, wenn der Verbindungsstift (V) eingeschlagen ist.

19. Befestigungselement nach Anspruch 18, dadurch gekennzeichnet, daß die Hülse (H) mindestens ein stauchbares Teilstück (T) aufweist.

## Claims

1. A connecting pin of metal, in particular a nail-like connecting pin, for fastening an object to a counter member by driving in and/or screwing in or the like, for example in conjunction with a fastening element for fastening heat- and noise-insulating panels to a substructure, integrally comprising a substantially cylindrical pin member pointed at one end and a head situated at the impact end of the pin member at the other end, wherein the pin member (1) is surrounded in the region of the head (2) by an element (7), in particular of plastics material or rubber, which is plastically and/or resiliently deformable in the axial direction of the pin member (1) during driving in and/or screwing in or the like and one end face (12) of which rests against the head (2) with pre-stressing after driving in and/or screwing in or the like, **characterized in that** the other end face (11) rests against the counter member (**G**) directly or by way of a sleeve (**H**) of the fastening element (**B**), and the element (7) is integral with a preferably rotationally symmetrical casing (6) of the head (2) and-together therewith forms a head member (5) produced from plastics material and rigidly connected to the head (2).

2. A connecting pin according to Claim 1, **characterized in that** the element (7) comprises a tube member.

3. A connecting pin according to Claim 1, **characterized in that** the element (7) comprises a helical spring.

4. A connecting pin according to Claim 1, **characterized in that** the element (7) is made rotationally symmetrical.

5. A connecting pin according to Claim 1 or 4, **characterized in that** the element (7) is secured to the pin member (1) by means of press-fitting.

6. A connecting pin according to one of Claims 1 to 5, **characterized in that** the element (7) surrounds the pin member (1) at a distance (**s**).

7. A connecting pin according to one of Claims 1 to 6, **characterized in that** a cylindrical guide sleeve (8) is provided integrally on the head member (5), and rests, concentrically with the element (7), against the pin member (1) at least in the region of the head (2), preferably without play.

8. A connecting pin according to Claim 7, **characterized in that** the guide sleeve (8) is shorter, preferably considerably shorter, than the element (7).

9. A connecting pin according to one of Claims 1 to 6, **characterized in that** a plurality of annular beads (9), annular grooves or the like for controlling the compression are provided on the element (7).

10. A connecting pin according to Claim 9, **characterized in that** an annular bead (10) is provided on the open end face (11) of the element (7).

11. A connecting pin according to one of Claims 1 to 10, **characterized in that** the head end face (13) of the head member (5) opposite the open end face (11) is provided with a reinforcement, for example with a metallic plate (14) integrally moulded thereon or secured thereto by adhesion.

12. A connecting pin according to one of Claims 1 to 11, **characterized in that** the element (7) or the entire head member (5) consists of a plastic material which is plastically deformable under pressure on impact and which has a defined residual elasticity.

13. A connecting pin according to one of Claims 1 to 12, **characterized in that** the element (7) or the head member (5) can be coloured in different ways, and the respective colouring characterizes a groups of mutually similar connecting pins (1).

14. A connecting pin according to one of Claims 1 to 13, **characterized in that** the pin member (1) is constricted at least once to a smaller diameter (d) and the constriction (3) is formed as a frustum which tapers inwardly in the driving direction of the connecting pin (1).

15. A connecting pin according to one of Claims 1 to 14, **characterized in that** the head (2) is constructed as a circular plate.

16. A connecting pin according to one of Claims 1 to 15, **characterized in that** the pin member (1) is made smoothly cylindrical.

17. A connecting pin according to one of Claims 1 to 15, **characterized in that** the pin member (1) is provided at least in part with a cylindrical thread and the head (2) is constructed as a screw head.

18. A fastening element, in particular for fastening noise- and heat-insulating panels to a substructure, with a holding part preferably constructed as an injection-moulded plastics part and having a sleeve which has a pressure plate integrally moulded on the rear end of the fastening element, wherein the pressure plate is made having a large area as compared with the diameter of the sleeve, and with a connecting pin according to one of Claims 1 to 17, **characterized in that** the end face (11) of the element (7) or the head member (5) remote from the head (2) of the connecting pin (1) rests against an annular stop face (15) of the sleeve (**H**) when the connecting pin (**V**) is driven in.

19. A fastening element according to Claim 18, **characterized in that** the sleeve (**H**) has at least one compressible portion (**T**).

## Revendications

1. Broche d'assemblage en métal, en particulier broche d'assemblage du genre aiguille, destinée à fixer un objet sur un contre-appui par enfoncement par frappe et/ou par vissage ou d'une façon analogue, par exemple en liaison avec un élément de fixation destiné à fixer des plaques d'isolation thermique et acoustique sur une construction sous-jacente,
constituée, en formant une seule pièce, d'un corps de broche essentiellement cylindrique, pointu à une extrémité, et d'une tête située à l'autre extrémité, du côté de frappe du corps de broche,
étant entendu que le corps de broche (1) est, dans la zone de la tête (2), enveloppé par un élément (7), en particulier en matière plastique ou en caoutchouc, déformable plastiquement et/ou élastiquement suivant la direction axiale du corps de broche (1) lors de l'enfoncement par frappe et/ou du vissage ou similaire, élément (7) dont une face frontale (12) est appliquée par précontrainte sur la tête (2) après enfoncement par frappe et/ou vissage, ou similaire,
caractérisée en ce que l'autre face frontale (11) est appliquée directement ou par l'intermédiaire d'une douille (H) de l'élément de fixation (B), contre le contre-appui (G),
et en ce que l'élément (7) est solidaire d'une enveloppe (6), de préférence symétrique en rotation, de la tête (2) et forme avec cette enveloppe (6) une pièce de tête (5), réalisée sous la forme d'une pièce injectée en matière plastique et reliée de façon fixe à la tête (2).

2. Broche d'assemblage suivant la revendication 1, caractérisée en ce que l'élément (7) est constitué par une pièce tubulaire.

3. Broche d'assemblage suivant la revendication 1, caractérisée en ce que l'élément (7) est constitué par un ressort hélicoïdal.

4. Broche d'assemblage suivant la revendication 1, caractérisée en ce que l'élément (7) est réalisé symétrique en rotation.

5. Broche d'assemblage suivant la revendication 1 ou la revendication 4, caractérisée en ce que l'élément (7) est fixé sur le corps de broche (1) par ajustage serré.

6. Broche d'assemblage suivant l'une des revendications 1 à 5, caractérisée en ce que l'élément (7) entoure le corps de broche (1) à une certaine distance (s).

7. Broche d'assemblage suivant l'une des revendications 1 à 6, caractérisée en ce que, sur la pièce de tête (5), est prévue une douille de guidage (8), formant une seule pièce, appliquée, concentriquement avec l'élément (7), sur le corps de broche (1) au moins dans la zone de la tête (2), de préférence sans jeu.

8. Broche d'assemblage suivant la revendication 7, caractérisée en ce que la douille de guidage (8) est plus courte, de préférence très nettement plus courte, que l'élément (7).

9. Broche d'assemblage suivant l'une des revendications 1 à 6, caractérisée en ce que, sur l'élément (7), sont prévus plusieurs bourrelets annulaires (9), rainures annulaires ou similaires, destinés à maîtriser l'écrasement.

10. Broche d'assemblage suivant la revendication 1, caractérisée en ce qu'un bourrelet annulaire (10) est prévu sur la face frontale ouverte (11) de l'élément (7).

11. Broche d'assemblage suivant l'une des revendications 1 à 10, caractérisée en ce que la face frontale (13) de la pièce de tête (5), située côté tête à l'opposé de la face frontale ouverte (11), est équipée d'une protection, par exemple d'une plaque métallique (14) appliquée par projection ou par collage.

12. Broche d'assemblage suivant l'une des revendications 1 à 11, caractérisée en ce que l'élément (7), ou la totalité de la pièce de tête (5), sont constitués d'une matière plastique déformable plastiquement par pression sous l'effet de frappe, et présentant une élasticité résiduelle déterminée.

13. Broche d'assemblage suivant l'une des revendications 1 à 12, caractérisée en ce que l'élément (7), ou la totalité de la pièce de tête (5), peuvent être colorés de façon différente et que leur coloration respective caractérise un groupe de broches d'assemblage (1) identiques entre elles.

14. Broche d'assemblage suivant l'une des revendications 1 à 13, caractérisée en ce que le corps de broche (1) est étiré au moins une fois jusqu'à un diamètre plus petit (d), et en ce que le rétrécissement (3) est réalisé sous la forme d'un tronc de cône s'amincissant dans la direction d'enfoncement de la broche d'assemblage (1).

15. Broche d'assemblage suivant l'une des revendications 1 à 14, caractérisée en ce que la tête (2) est réalisée sous la forme d'une plaque circulaire.

16. Broche d'assemblage suivant l'une des revendications 1 à 15, caractérisée en ce que le corps de broche (1) est réalisé sous la forme d'un cylindre lisse.

17. Broche d'assemblage suivant l'une des revendications 1 à 15, caractérisée en ce que le corps de broche (1) est pourvu, au moins en partie, d'un filetage cylindrique et la tête (2) est réalisée sous la forme d'une tête vissable.

18. Organe de fixation, destiné avant tout à la fixation de plaques d'isolation thermique et acoustique sur une construction sous-jacente, comportant une pièce de maintien réalisée, de préférence, sous la forme d'une pièce en matière plastique produite par injection et comprenant une douille qui présente, à l'extrémité arrière de l U'organe de fixation, une plaque de pression, formée en une seule pièce et réalisée avec une grande surface par rapport au diamètre de la douille, et une broche d'assemblage suivant l'une des revendications 1 à 17, caractérisé en ce que la face frontale (11) de l'élément (7) ou de la pièce de tête (5), située à l'opposé de la tête (2) de la broche d'assemblage (1), est appliquée contre une surface annulaire de butée (15) de la douille (H) quand la broche d'assemblage (V) est enfoncée par frappe.

19. Organe de fixation suivant la revendication 18, caractérisé en ce que la douille (H) présente au moins une partie (T) pouvant se déformer par écrasement.
